# EUROPEAN PATENT APPLICATION

(11) **EP 1 714 687 A1**
(43) Date of publication of application: **25.10.2006**
(21) Application number: 06112717.1
(22) Date of filing: 18.04.2006
(51) Int. Cl.: B01D 29/21

(54) **Filter device**

(30) Priority: 18.04.2005 US 672294 P; 15.03.2006 JP 2006071370
(71) Applicant: Yamashin-Filter Corp., Yokohama-shi Yokohama-shi, Kanagawa (JP)
(72) Inventor: Komine, Akiyoshi c/o Yamashin-Filter Corp., Yokohama-Shi Kanagawa (JP); Okamoto, Yoshinobu c/o Yamashin-Filter Corp., Yokohama-Shi Kanagawa (JP)
(74) Representative: van Westenbrugge, Andries

(57) **Abstract**

The case (16) of a filter cartridge has the shape of a cylinder that is closed at one end and open at the other end, and has a coupling member (18) that on the open end capable of coupling to the head; the filter element (17) and a securing member (27) are enclosed within this case; while the securing member (27) is provided as a unit with an inner cylinder (29); this inner cylinder is removably inserted into the interior of the filter element (17); by means of this insertion, the filter element is combined as a unit with the securing member; and by means of the securing member (27) becoming coupled to the coupling member (18), the filter element is secured within the case.

## Description

The present invention relates to a filter apparatus used, for example, in the fluid recirculation system of a hydraulic circuit or the like, in order to catch foreign matter, contaminants, pollutants and the like in the fluid.

JP-A-2004-81996 discloses a filter apparatus comprising a head having an inlet and an outlet, and a filter cartridge that encloses a cylindrical filter element within a case, where the filter cartridge is removably installable in the head.

The head is attached to a fluid line of a fluid recirculation system or the like, and fluid flowing through the fluid recirculation system flows in from the inlet of the head and flows into the filter cartridge, and also passes through the filer element and flows out from the outlet of the head, so that any foreign material and the like within the fluid is caught and removed by the filter element as the fluid passes through the filter element.

The filter element may comprise corrugated filter paper, nonwoven cloth or the like formed into a cylinder. Moreover, a reinforcing member comprising an inner cylinder having a large number of small pores in its peripheral surface is mated to the inside periphery of this cylindrical filter element. This filter element is enclosed within the case together with the securing member, and is secured by this securing member at a predetermined position within the case, for example it is disposed concentrically along the central axis of the case.

With use, the filter element undergoes gradual degradation of its performance due to clogging and the like, and thus must be periodically replaced. When the time to replace the filter element comes, the filter cartridge is removed from the head, and then the securing member is removed from within the filter cartridge case and moreover the filter element is extracted from within the case.

The filter element that was extracted from the case is disposed of and a new filter element is enclosed within the case, and moreover the securing member is enclosed within the case to secure the filter element within the case and thus assemble a filter cartridge, and this filter cartridge is installed in the head and reused.

However, in conventional filter apparatus, the securing member is separate from the filter element, so the stability with which it secures the filter element within the case is low and may allow the filter element to shift somewhat within the case, resulting in reduction of its performance.

In addition, when an inner cylinder used for reinforcement is applied to the inside surface of the filter element, at the time that the filter element is to be replaced and discarded, the filter element is discarded together with the inner cylinder, resulting in the inner cylinder being disposed of needlessly and the filter element replacement costs being increased by that much, and in addition, the amount of waste generated is increased on account of the inner cylinder, so there are problems that arise with respect to environmental concerns and with respect to the conservation of resources.

There are also proposals wherein the securing member used to secure the filter element to the case of the filter cartridge is attached to the filter element as a unit, and at the time of replacement the filter element is disposed of as a unit with the inner cylinder and securing member, but in this case because the securing member and inner cylinder are disposed of together with the filter element, the amount of waste is increased and the replacement costs are further increased, and there are problems that arise with respect to environmental concerns and with respect to the conservation of resources.

On the other hand, there are also proposals wherein the filter element is constituted so as to be separable from the inner cylinder used for reinforcement, so at the time of replacement of the filter element, the inner cylinder is removed from the filter element and only the filter element is disposed of and the inner cylinder is reused, but in this case, the filter cartridge comprises four individual parts: the case, securing member, inner cylinder and the filter element, and thus the number of steps required to assemble the filter cartridge increases, thus reducing the efficiency of the work and increasing the complexity of part management.

The present invention aims to avoid the above drawbacks and has as its object to provide a filter apparatus wherein: the filter element can be stably and reliably secured at the stipulated position within the case; the filter element only can be disposed of at the time of replacement of the filter element; and moreover, the number of steps required at the time of assembly of filter cartridges can be reduced to increase the efficiency of the assembly process.

To that end, the present invention relates to a filter apparatus having the features of claim 1. The filter apparatus according to the invention comprises a head having an inlet and an outlet, and a filter cartridge that encloses a cylindrical filter element within a case, where said filter cartridge is removably installable in said head, and where fluid that flows in from the inlet of said head into the interior of said filter cartridge passes through said filter element and flows out from the outlet of the head, wherein: the case of said filter cartridge has the shape of a cylinder that is closed at one end and open at the other end and has on the open end a coupling member that is able to couple to said head; said filter element and a securing member are enclosed within this case; while said securing member is provided as a unit with an inner cylinder; this inner cylinder is removably inserted into the interior of said filter element; by means of this insertion, the filter element is combined as a unit with the securing member; and by means of said securing member becoming removably coupled to said coupling member, said filter element is secured within said case.

Said securing member and said coupling member are removably coupled to each other by means of being screwed-in, or by means of the engagement of an elastically displaceable coupler provided on one of said securing member or said coupling member and a coupling groove provided on the other.

In addition, the inner cylinder of said securing member and said filter element are separably combined with each other by means of being screwed-in.

With the filter apparatus according to the present invention, the filter element can be stably and reliably secured at the stipulated position within the case; the filter element only can be disposed of at the time of replacement of the filter element; and moreover, the number of steps required at the time of assembly of filter cartridges can be reduced to increase the efficiency of the assembly process.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

The invention can be better understood with reference to the following drawings and description. The components in the figures are not necessarily to scale, emphasis instead being placed upon illustrating the principles of the invention. Moreover, in the figures, like referenced numerals designate corresponding parts throughout the different views.
Figure 1 is a cross section illustrating the filter apparatus according to a first embodiment.
Figure 2 is a cross section illustrating the filter apparatus with the filter cartridge removed from the head
Figure 3 is a cross section illustrating the filter element being removed from the filter cartridge together with the securing member.
Figure 4 is a cross section illustrating the securing member being removed from the filter element.
Figure 5 is a cross section illustrating the filter element in the state with the securing member removed.
Figure 6 is a cross section illustrating the filter apparatus according to a second embodiment.
Figure 7 is an enlarged cross section of a portion of this filter apparatus.

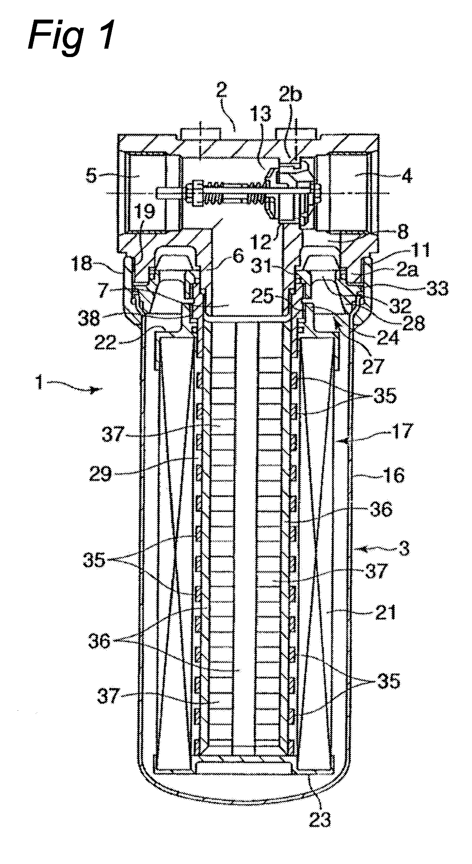

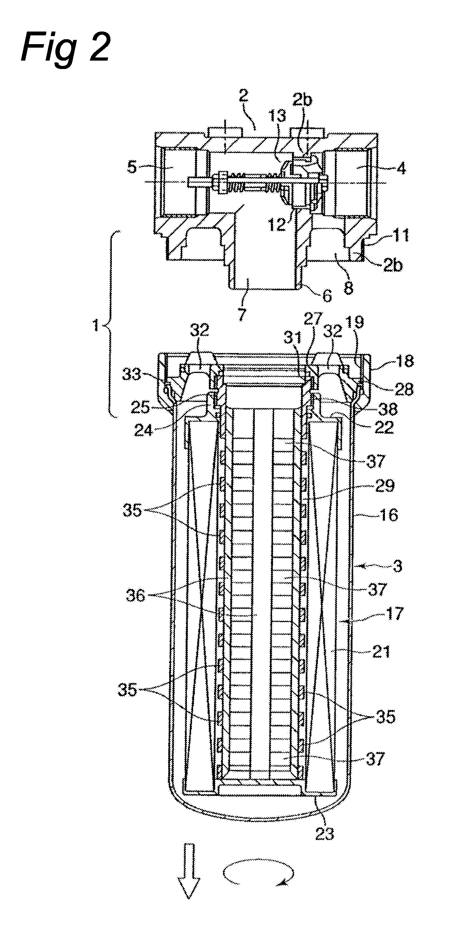

FIG. 1 shows the structure of a filter apparatus according to a first embodiment of the present invention, while FIGs. 2-5 illustrate the procedure for disassembling this filter apparatus.

This filter apparatus 1 comprises a head 2 and a filter cartridge 3 removably installed in this head 2. Upon the head 2 are formed an inlet 4 at one end and an outlet 5 at the other end, and also a downward-protruding connecting tube 6 is formed in the middle; the interior of this connecting tube 6 becomes an outflow channel 7 leading to the outlet 5, while the annular space between the outside periphery of the connecting tube 6 and the bottom peripheral wall 2a of the head 2 becomes an inflow channel 8 leading to the inlet 4.

Threads 11 are formed on the outside peripheral surface of the bottom peripheral wall 2a of the head 2, and a pass-through hole 12 that directly connects the inlet 4 to the outlet 5 is formed in a wall area 2b between the inlet 4 and outlet 5, while a relief valve 13 which serves as a safety valve that is actuated in case of abnormally high pressures is installed within this pass-through hole 12.

The filter cartridge 3 comprises a case 16 in the shape of a cylinder that is closed at one end and a filter element 17 enclosed within this case 16, while the opening at the upper end of the case 16 is formed as a wide orifice, and a connecting member 18 is attached by welding or another method to the outer periphery of the opening of this wide orifice. In this embodiment, this connecting member 18 is a nut with threads 19 formed on the inside surface thereof.

The filter element 17 may comprise, for example: a filter medium 21 made of corrugated filter paper, nonwoven cloth or the like formed into a cylinder; and first and second end plates 22 and 23 attached to either end of this filter medium 21. An insertion hole 24 that communicates with the interior of the filter medium 21 is formed in the center of the first end plate 22, and the lower end surface of the filter medium 21 is closed by the second end plate 23. The insertion hole 24 is disposed concentrically along the centerline of the filter medium 21, and threads 25 are formed on the inside surface thereof.

The head 2 and the case 16 and connecting member 18 of the filter cartridge 3 are each made of metal and the end plates 22 and 23 and tube 24 of the filter element 17 are each made of metal or a synthetic polymer.

A securing member 27 is inserted into the case 16; this securing member 27 comprises a main portion 28 and an inner cylinder 29 combined as a unit, where the main portion 28 is annular in shape with an inside hole 31 in the center. Many pores 32 are formed in this main portion 28 at positions around the inside hole 31 in the center, and threads 33 are formed on the outer periphery.

The inner cylinder 29 is fit and affixed to the inside surface of the inside hole 31 of the main portion 28, and coupled as a unit to the main portion 28 so as to extend downward from the main portion 28. This inner cylinder 29 comprises a plurality of rings 35 disposed coaxially at equal intervals, and these rings 35 are linked and affixed with a plurality of longitudinal members 36, thus constituting a cylinder with a plurality of gaps 37 for passing fluid provided in its peripheral surface. Threads 38 are formed on the upper outer peripheral surface of this inner cylinder 29.

The inner cylinder 29 of the securing member 27 passes through the insertion hole 24 of the end plate 22 in the filter element 17, and is inserted so that it passes from its top end to bottom end in the interior of the filter medium 21, and the main portion 28 fits into the inside of the connecting member 18 of the case 16.

Moreover, the threads 25 of the insertion hole 24 in end plate 22 spirally engage the threads 38 on the upper part of the inner cylinder 29 and thereby the inner cylinder 29 and filter element 17 are combined as a unit. In addition, the threads 33 on the outer periphery of the main portion 28 spirally engage the threads 19 of the connecting member 18 and thereby the securing member 27 provided with the filter element 17 is assembled into the case 16, so that the filter element 17 is secured via this securing member 27 so as to be disposed concentrically upon the centerline of the case 16.

When a filter cartridge 3 thus assembled is to be installed in the head 2, the connecting member 18 is fitted to the outside peripheral surface of the bottom peripheral wall 2a of the head 2 and also the connecting member 18 is rotated as a unit with the case 16 so that the threads 19 of the connecting member 18 engage the threads 11 of the head 2 and is thus tightened. Thereby, filter cartridge 3 is connected to the head 2 and the filter apparatus 1 is assembled.

In this assembly, the tip of the connecting tube 6 of the head 2 passes through the inside hole 31 of the main portion 28 of the securing member 27, thus entering and fitting within the inner cylinder 29, so that the outflow channel 7 within the connecting tube 6 communicates with the interior of the filter medium 21 of the filter element 17.

In addition, the bottom surface of the bottom peripheral wall 2a of the head 2 is tightly sealed to the top surface of the main portion 28, so that the inflow channel 8 on the inside of the bottom peripheral wall 2a communicates with the space between the outside surface of the filter medium 21 and the inside surface of the case 16 through the pores 32 of the main portion 28.

Thus, fluid enters from the inlet 4 of the head 2, passes through the inflow channel 8 and sequentially flows in toward the outside of the filter medium 21. This fluid then passes through the filter medium 21 and also through the gaps 37 in the peripheral surface of the inner cylinder 29 and flows into the inside of the filter medium 21. When the fluid passes through the filter medium 21, foreign matter and the like within the fluid is caught by the filter medium 21 and thus removed. The fluid that flows into the inside of the filter medium 21 then sequentially flows out from the outlet 5 via the outflow channel 7 of the head 2.

When a fluid flows so as to pass through the filter medium 21, a relatively large pressure is applied to the filter medium 21 from its outside toward its inside, but the inner cylinder 29 is inserted into the inside of the filter medium 21 so the filter medium 21 is reinforced by this inner cylinder 29, and thus deformation of the filter medium 21 is prevented.

In addition, the filter medium 21 is reliably secured together with the inner cylinder 29 at the stipulated position along the centerline of the case 16, and for this reason the fluid is divided uniformly with equal pressures applied to each part of the filter medium 21 as it passes through the filter medium 21, and thus the filter medium 21 can function reliably without any drop in performance.

On the other hand, when the performance of the filter element 17 has degraded due to clogging or the like after long-term use and the time for replacement has come, first loosen the connecting member 18 and then remove the filter cartridge 3 from the head 2 (see FIG. 2).

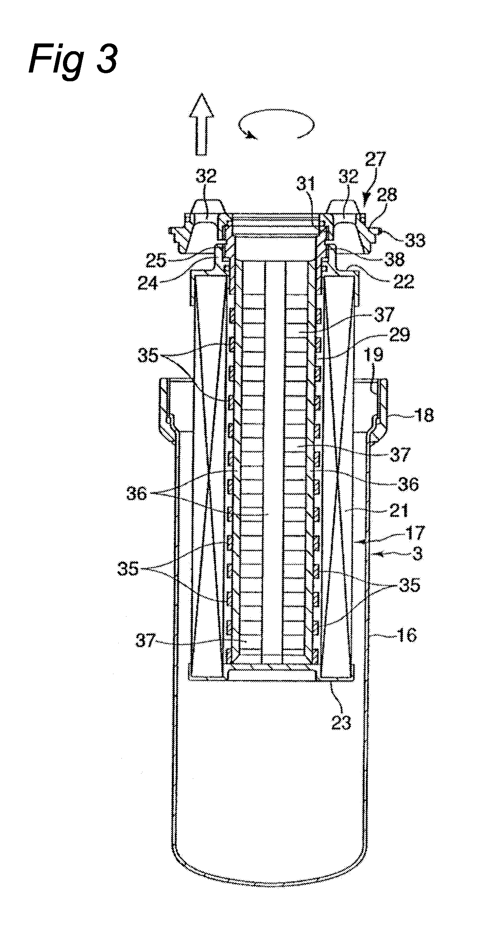

Next, rotate the securing member 27 in the removed filter cartridge 3 in the direction around the axis with respect to the case 16 to unscrew the threads 33 of the main portion 28 from the threads 19 of the connecting member 18, and lift the securing member 27 up and pull it out from the case 16 (see FIG. 3).

The filter element 17 is combined with the securing member 27 as a unit, and accordingly, by pulling the securing member 27 out from within the case 16, it is possible to remove the filter element 17 from within the case 16 together with the securing member 27 at the same time.

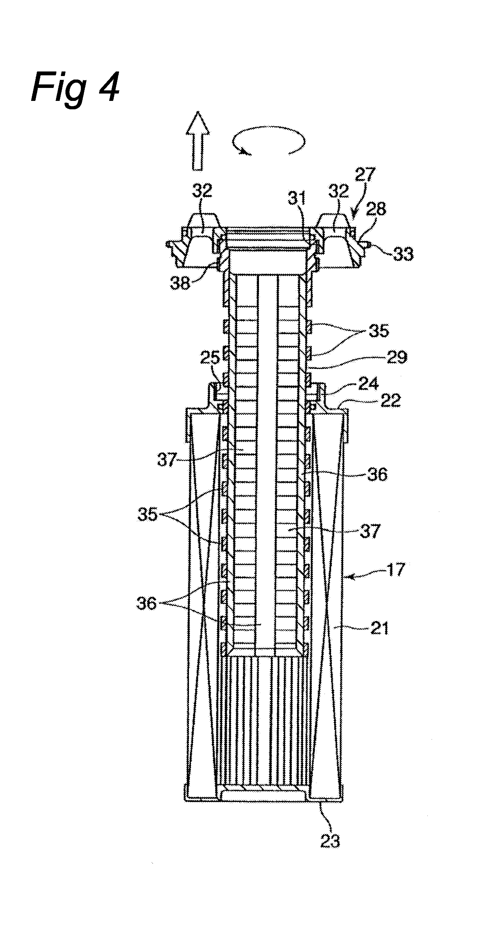

After the filter element 17 is removed from within the case 16 together with the securing member 27, the securing member 27 is rotated around its axis with respect to the filter element 17, thereby unscrewing the threads 38 on the upper part of the inner cylinder 29 from the threads 25 on the insertion hole 24 at the end plate 22 and the securing member 27 is pulled upward from the filter element 17 to withdraw the inner cylinder 29 from the interior of the filter element 17 (see FIG. 4).

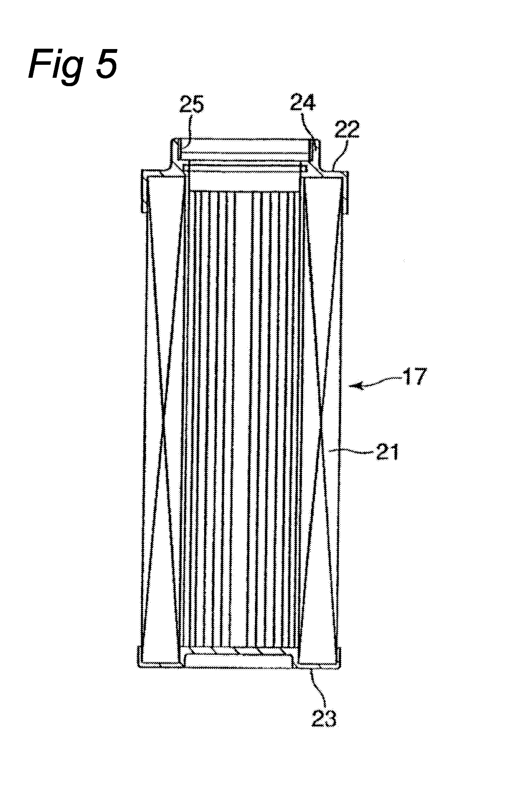

The filter element 17 is thus separated from the securing member 27, leaving the filter element 17 as a single component (see FIG. 5). The filter element 17 thus separated and left as a single component is disposed of via the stipulated disposal route.

The case 16 and securing member 27 of the disassembled filter cartridge 3 are reused and not discarded. To wit, first clean the case 16 and securing member 27, install a new filter element 17 in the securing member 27 and enclose the new filter element 17 together with the securing member 27 within the case 16 to assemble the filter cartridge 3 by the reverse of the procedure described previously, and then install this filter cartridge 3 in the head 2 and reuse.

In this manner, when the time to replace the filter element 17 has come, it is possible to discard only the filter element 17 and replace only the filter element 17 with a new one.

The inner cylinder 29 used to reinforce the filter element 17 also serves as a member that secures the filter element 17 within the case 16. Moreover, when the filter element 17 is replaced, this inner cylinder 29 can be separated from the filter element 17 and reused repeatedly and not discarded, so there is no waste, the cost at the time of replacement of the filter element 17 can be reduced and the only component to be disposed of is the filter element 17, so the amount of waste generated can be reduced and thus this is beneficial with respect to environmental concerns, conservation of resources and other problems.

The filter cartridge 3 thus comprises three components: the case 16, securing member 27 and the filter element 17. When the filter cartridge 3 is assembled, the filter element 17 is placed in the inner cylinder 29 of the securing member 27, and this securing member 27 is inserted into the case 16, so the filter element 17 is preassembled with the filter element 17, and thus the filter element 17 can be enclosed within the case at the same time as the task of inserting the securing member 27 into the case 16. Accordingly, the number of work steps can be reduced and so the filter cartridge 3 can be assembled efficiently.

In passing, if the filter element 17 is inadvertently enclosed within the case 16 upside-down with the up and down directions inverted, the filter element will not give the normal performance but with the present embodiment, the inner cylinder 29 of the securing member 27 is inserted from the insertion hole 24 at the upper end of the filter element 17 into its interior, and moreover the threads 38 in the upper part of the inner cylinder 29 are screwed into the threads 25 on the inside periphery of its insertion hole 24 to assemble the filter element 17 and securing member 27 as a unit, so the filter element 17 is enclosed within the case 16 together with the securing member 27 in this state. For this reason, this does not invite assembly errors such as inadvertently enclosing the filter element 17 within the case 16 upside-down with the up and down directions inverted, and thus the assembly can always be performed correctly without error. Note that the end plates 22 and 23 of the filter element 17 can be formed from combustible synthetic polymer, and in this case, the filter element 17 removed from the securing member 27 can be disposed of as is by incineration.

In the aforementioned embodiment, the inner cylinder 29 of the securing member 27 is constituted by combining a plurality of rings 35 and a plurality of longitudinal members 36, but this constitution is not a limitation, as the main portion 28 and inner cylinder 29 of the securing member 27 may also be formed as a single molded article made out of synthetic resin or metal.

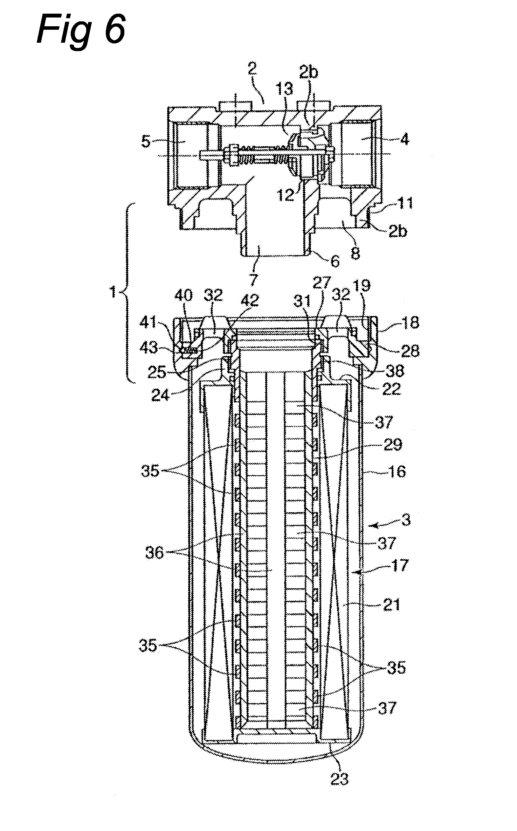

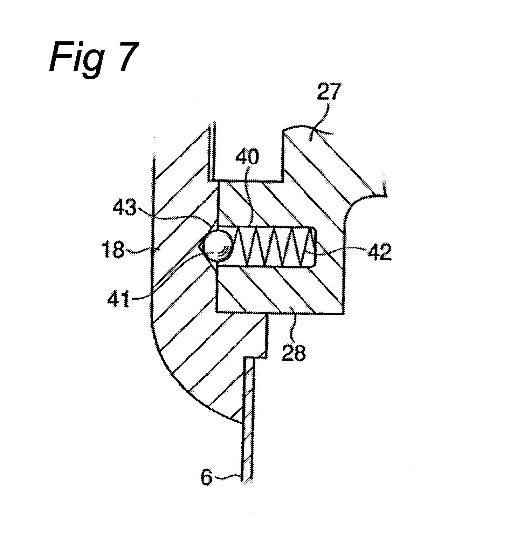

Moreover, in the aforementioned embodiment, the securing member 27 is screwed into the inside surface of the connecting member 18 to connect the securing member 27 to the connecting member 18, but they may also be connected by a connecting means such as that in a second embodiment illustrated in FIG. 6 and FIG. 7.

In the second embodiment, a containment hole 40 is formed in the outside peripheral surface of the main portion 28 of the securing member 27 so as to extend in the radial direction thereof, and a steel ball or other small spherical engagement member 41 is moveably contained within this containment hole 40. This engagement member 41 is biased by a coil spring or other elastic body 42 so that a portion thereof protrudes from the outside peripheral surface of the main portion 28 of the securing member 27. The opening at the tip of the containment hole 40 is round and its diameter is slightly smaller than the diameter of the engagement member 41, and accordingly, the engagement member 41 is displaced elastically within the containment hole 40 but does not fall out of the containment hole 40.

On the other hand, an engagement groove 43 corresponding to the engagement member 41 is formed in the inside peripheral surface of the connecting member 18. This engagement groove 43 may have a V-shaped cross section, for example, and is formed in a continuous ring in the circumferential direction of the connecting member 18.

FIG. 6 and FIG. 7 illustrate the state in which the securing member 27 is connected to the connecting member 18, and in this state, the elastic force of the elastic body 42 causes a portion of he engagement member 41 to protrude from the outside peripheral surface of the securing member 27 and engage the engagement groove 43 of the connecting member 18, and this engagement causes the securing member 27 to be combined as a unit with the connecting member 18.

In this state, when the filter element 17 is to be removed from the case 16 together with the securing member 27 in order to replace the filter element 17, the securing member 27 is pulled upward from the connecting member 18 with more than a certain amount of force. At this time, the pulling-up force causes the engagement member 41 to overcome the elastic force of the elastic body 42 due to the inside peripheral surface of the connecting member 18 and be elastically displaced and pushed in toward the interior of the containment hole 40, thereby disengaging from the engagement groove 43 of the connecting member 18, and thus the securing member 27 can be separated from the connecting member 18 and the filter element 17 can be removed from the case 16 together with the securing member 27.

On the other hand, when a new filter element 17 is installed in the inner cylinder 29 of the securing member 27 and the securing member 27 is to be assembled within the case 16, the inner cylinder 29 is inserted within the case 16 together with the filter element 17 and also the main portion 28 of the securing member 27 is pushed down into the connecting member 18 with more than a certain amount of force.

Before the main portion 28 of the securing member 27 advances within the connecting member 18, the engagement member 41 protrudes from the outside peripheral surface of the main portion 28, but as the main portion 28 advances within the connecting member 18, the engagement member 41 overcomes the elastic force of the elastic body 42 and sinks in toward the interior of the containment hole 40. When the securing member 27 is pushed in to a stipulated position within the connecting member 18 and the engagement groove 43 is opposite the engagement member 41, that engagement member 41 will be elastically displaced under the spring force of the elastic body 42 so that it protrudes from the outside peripheral surface of the securing member 27 and engages the engagement groove 43, and this engagement causes the securing member 27 to be connected to the connecting member 18, and thus the filter cartridge 3 is assembled as a unit.

In this manner, in this second embodiment, the securing member 27 is not rotated and screwed in as in the first embodiment, but rather the securing member 27 can be attached or removed from the connecting member 18 with a simple operation of merely pushing it down or pulling it up in the axial direction with more than a fixed amount of force, and accordingly the filter element 17 can be replaced even more efficiently.

Note that in the aforementioned embodiment, an engagement member 41 is provided on the securing member 27 and the engagement groove 43 that is engaged by this engagement member 41 is provided on the connecting member 18, but the opposite constitution wherein an engagement member 41 is provided on the connecting member 18 and the engagement groove 43 that is engaged by this engagement member 41 is provided on the securing member 27 may also be used.

In addition, the spherical engagement member 41 in the aforementioned embodiment may be replaced with a flat-spring member made of synthetic polymer or metal that has a protrusion thereupon as the engagement member, and a constitution may be adopted whereby the protrusion of the engagement member is elastically displaced to permit the engagement groove to be engaged or disengaged, and thus connect the securing member 27 to the connecting member 18.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. Filter apparatus comprising:
a head having an inlet and an outlet;
a filter cartridge removably installable in the head that comprises a case and a cylindrical filter element enclosed within the case, wherein fluid flowing into the inlet of the head into the interior of the filter cartridge passes through the filter element and flows out from the outlet of the head, and wherein the case of the filter cartridge has the shape of a cylinder that is closed at a first end and open at a second end, the second end having a coupling member capable of coupling to the head;
a securing member which is enclosed, along with the filter element, within the case; and
an inner cylinder which is integrally provided for the securing member and is removably inserted in the filter element such that the filter element is combined as a unit with the securing member where the inner cylinder, wherein the filter element is secured within said case by means of the securing member which is removably coupled to the coupling member.

2. Filter apparatus according to one of the preceding claims, wherein the inner cylinder of the securing member and the filter element are separably combined with each other by thread means.

3. Filter apparatus according to claim 1, wherein the securing member and the coupling member are removably coupled to each other by thread means.

4. Filter apparatus according claim 3, wherein the inner cylinder of the securing member and the filter element are separably combined with each other by thread means.

5. Filter apparatus according to one of the preceding claims, wherein the securing member and the coupling member are removably coupled to each other by means of the engagement of an elastically displaceable coupler provided on one of the securing member and the coupling member and a coupling groove provided on the other.

6. Filter apparatus according claim 5, wherein the inner cylinder of the securing member and the filter element are separably combined with each other by thread means.
